# EUROPEAN PATENT SPECIFICATION

(11) **EP 0 976 792 B1**
(45) Date of publication and mention of the grant of the patent: **09.10.2002**
(21) Application number: 99114189.6
(22) Date of filing: 23.07.1999
(51) Int. Cl.: C09B 67/22, D06P 1/38, C09B 62/507

(54) **Fiber-reactive black dye mixtures**
Schwarze Mischungen von faserreaktiven Farbstoffen
Mélanges de colorants réactifs noirs

(30) Priority: 28.07.1998 US 123604
(43) Date of publication of application: 02.02.2000
(73) Proprietor: DyStar Textilfarben GmbH & Co. Deutschland KG, 65926 Frankfurt am Main (DE)
(72) Inventor: Pedemonte, Ronald P., Dr., 65817 Eppstein-Vockenhausen (DE); Meier, Stefan, Dr., 60529 Frankfurt am Main (DE)

(56) References cited:
- EP-A- 0 832 939
- EP-A- 0 870 807
- DE-A- 19 620 415
- DATABASE WPI Section Ch, Week 199128 Derwent Publications Ltd., London, GB; Class E21, AN 1991-205279 XP002123935 & KR 9 004 223 B (I HWA IND CO), 18 June 1990 (1990-06-18)

## Description

Competitive and environmental concerns have lead to increased requirements being imposed on the use of reactive dyestuffs, especially in the segment of black dyes. Today, not only the quality of dyed product, but also efficiency and environmental impact of the dyeing process have come under scrutiny. The search continues for new fiber-reactive dyes that provide a higher fixation on the fiber, thus providing ecological advantages.

Deep black dye mixtures are known, for example, from Japanese Patent Application Publication Sho-58-160 362 which are based on a navy-blue disazo dye of formula (I) and an orange monoazo dye of formula (II)

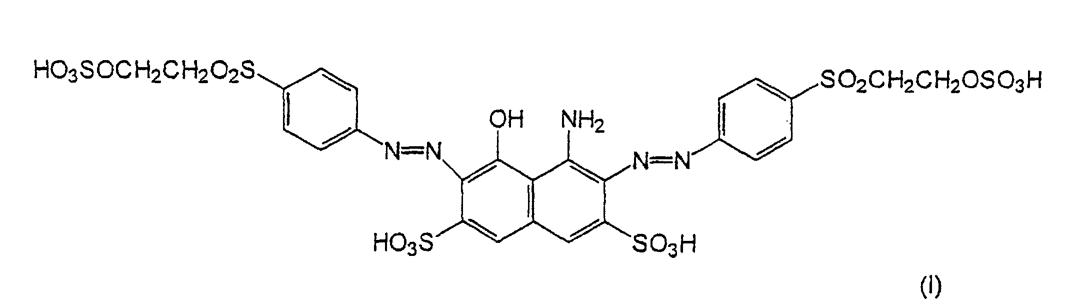

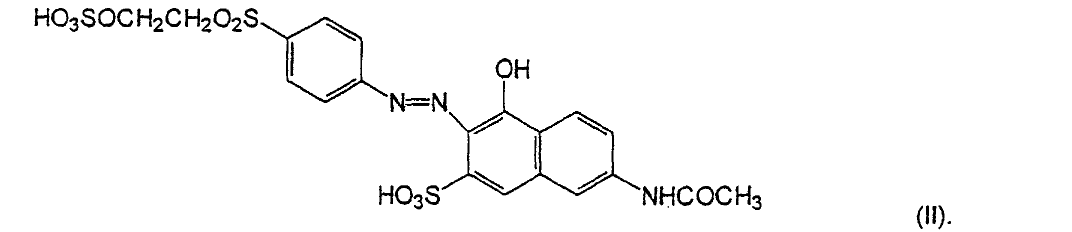

DE 196 20 415 A discloses fiber-reactive black dye mixtures comprising a black dye of formula 1 a monoazo-reactive dye falling under the scope of formula 3 and at least one monoazo-reactive dye not falling under the scope of formula 2.

Contrary to these prior art mixtures, the dye mixtures of the instant invention, defined below, show a higher fixation value on cellulose when applied by exhaust methods and are environmentally advantageous over them.

The present invention provides black-dyeing dye mixtures of improved properties, comprising one or more, such as one, two or three, disazo dyes conforming to the general formula (1), optionally one or two monoazo dyes conforming to the general formula (2), one or more, such as one, two or three, monoazo dyes conforming to the general formula (3) and one or more, such as one, two or three, disazo dyes conforming to the general formula (4) 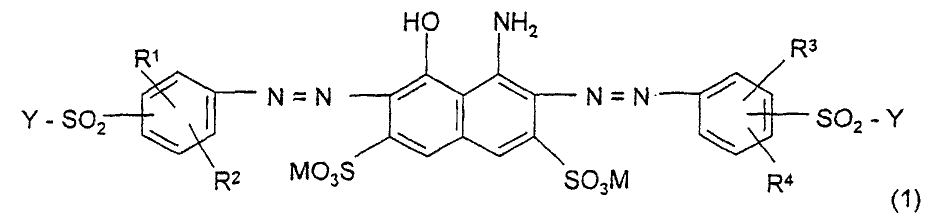 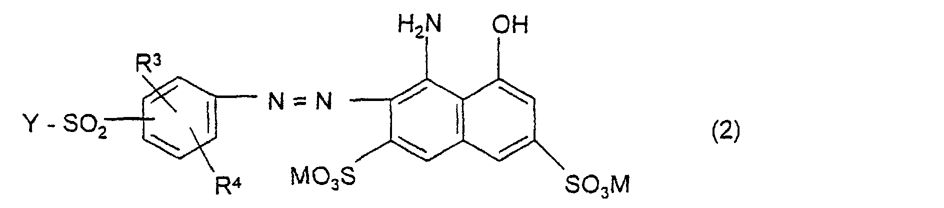 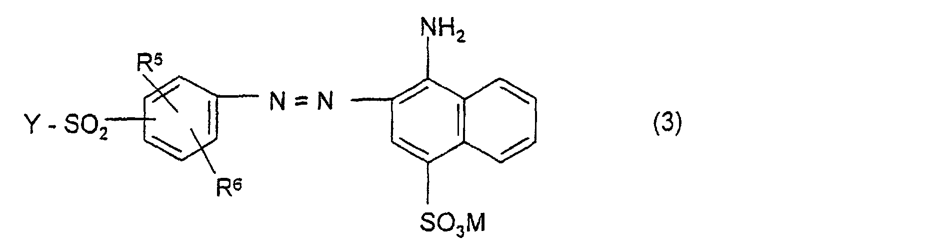 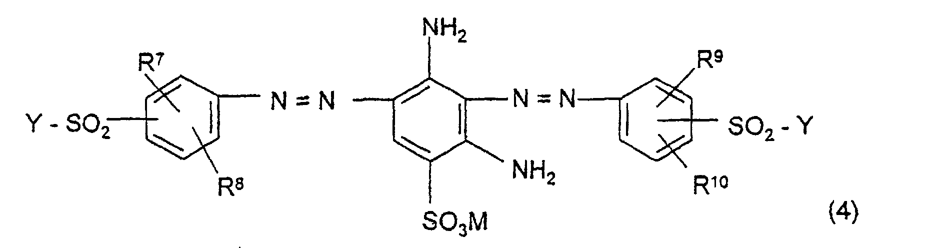 each being defined below, the dye, respectively dyes, of the general formula (1) or of the general formulae (1) and (2) being present in the mixture in an amount of from 65 to 95 % by weight, preferably of from 70 to 90 % by weight, and the dye, respectively dyes, of the general formula (3) being present in the dye mixture in an amount of from 1 to 25 % by weight, preferably of from 5 to 22.5 % by weight, and the dye, respectively dyes, of the general formula (4) being present in the dye mixture in an amount of from 1 to 25 % by weight, preferably of from 2 to 12 % by weight, calculated on 100 % by weight of the dye mixture comprising the dyes of the general formulae (1), (3) and (4) and optionally of formula (2), while the dyes of the formulae (1) and (2), if a dye of the general formula (2) is present in the dye mixture, are present in relation to one another of 99.5 % to 94 % in respect of the disazo dye(s) of formula (1) and of 0.5 to 6 % by weight in respect of the monoazo dye(s) of formula (2), calculated on the total amount of the dyes of formulae (1) and (2).

The meanings of the symbols in the formulae (1) to (4) are as follows:
- R¹: is hydrogen, methyl, ethyl, methoxy, ethoxy, sulfo or carboxy, preferably methoxy or hydrogen and in particular hydrogen,
- R²: is hydrogen, methyl, ethyl, methoxy, ethoxy, sulfo or carboxy, preferably hydrogen,
- R³: is hydrogen, methyl, ethyl, methoxy, ethoxy, sulfo or carboxy, preferably methoxy or hydrogen and in particular hydrogen,
- R⁴: is hydrogen, methyl, ethyl, methoxy, ethoxy, sulfo or carboxy, preferably hydrogen,
- R⁵: is hydrogen, methyl, ethyl, methoxy, ethoxy, sulfo or carboxy, preferably methoxy or hydrogen and in particular hydrogen,
- R⁶: is hydrogen, methyl, ethyl, methoxy, ethoxy, sulfo or carboxy, preferably hydrogen,
- R⁷: is hydrogen, methyl, ethyl, methoxy, ethoxy, sulfo or carboxy, preferably methoxy or hydrogen and in particular hydrogen,
- R⁸: is hydrogen, methyl, ethyl, methoxy, ethoxy, sulfo or carboxy, preferably hydrogen,
- R⁹: is hydrogen, methyl, ethyl, methoxy, ethoxy, sulfo or carboxy, preferably methoxy or hydrogen and in particular hydrogen,
- R¹⁰: is hydrogen, methyl, ethyl, methoxy, ethoxy, sulfo or carboxy, preferably hydrogen,
- Y: is in each instance, independently of the others, vinyl or is ethyl which is substituted in the β-position by a substituent which is eliminated by the action of an alkali, forming the vinyl group, such as chlorine, thiosulfato, sulfato, alkanoyloxy of 2 to 5 carbon atoms, such as acetyloxy, phosphato, sulfobenzoyloxy and p-toluylsulfonyloxy, and Y is preferably vinyl, β-chloroethyl, β-thiosulfatoethyl or β-sulfatoethyl and is in particular preferably vinyl and β-sulfatoethyl;
- M: is hydrogen or an alkali metal, such as lithium, sodium and potassium;
the groups -SO₂-Y are preferably bonded to the benzene ring meta or preferably para to the azo group.

Both in the formulae mentioned above and in those below the individual formula members, both with different and with the same designation within a formula, can within the scope of their definition have meanings which are the same as or different from one another.

The groups "sulfo", "thiosulfato", "carboxy", "phosphato" and "sulfato" include both the acid form and the salt form of these groups. Accordingly, sulfo groups are groups of the formula -SO₃M, thiosulfato groups are groups of the formula -S-SO₃M, carboxy groups are groups of the formula -COOM, phosphato groups are groups of the formula -OPO₃M₂ and sulfato groups are groups of the formula -OSO₃M, in which M is defined as above.

The dyes according to the general formula (1) are known from the U.S. Patents Nos. 2,657,205, 3,387,914, 4,072,463 and 4,257,770, and the dyes of the general formula (2) are known, for example, from European Patent Application Publication No. 0,832,939. The dyes of the general formula (3) are known from German Offenlegungsschrift Nr. 19 11 427 and the dyes of the general formula (4) have been described in the Korean Patent Specification No. 90-4223.

The dyes of the general formulae (1), (2), (3) and (4), in particular if those corresponding to the same general formula, have the same chromophore, can have, within the meaning of Y, structurally different fiber-reactive groups -SO₂-Y. In particular, the dye mixture can contain dyes of the same chromophore conforming to the formula (1) and/or dyes of the same chromophore conforming to formula (3) and/or (4) and optionally likewise of the general formula (2) in which the fiber-reactive groups -SO₂-Y are partly vinylsulfonyl groups and partly groups in which Y is a β-ethyl substituted group as defined above, such as β-chloroethylsulfonyl, β-thiosulfatoethylsulfonyl or, preferably, β-sulfatoethylsulfonyl groups. If the dye mixtures contain the respective dye components in the form of a vinylsulfonyl dye, the proportion of the respective vinylsulfonyl dye to the respective dye with Y being a β-ethyl substituted groups as defined above, such as a β-chloro- or β-thiosulfato- or β-sulfatoethyl-sulfonyl dye, will be up to about 30 mol-%, based on the respective dye chromophore. Preference is here given to the dye mixtures in which the proportion of vinylsulfonyl dye to said β-ethyl substituted dye, such as β-sulfatoethylsulfonyl dye is in terms of the molar ratio between 5 : 95 and 30 : 70.

Radicals of the formulae (5), (6), (7), (8) and (9) 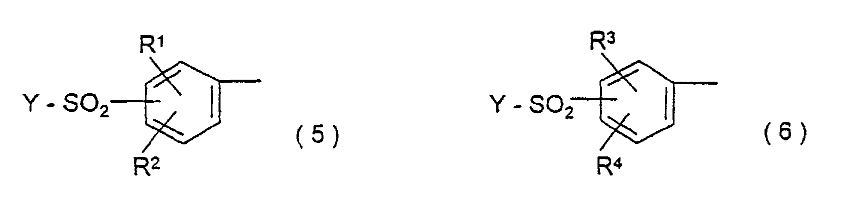 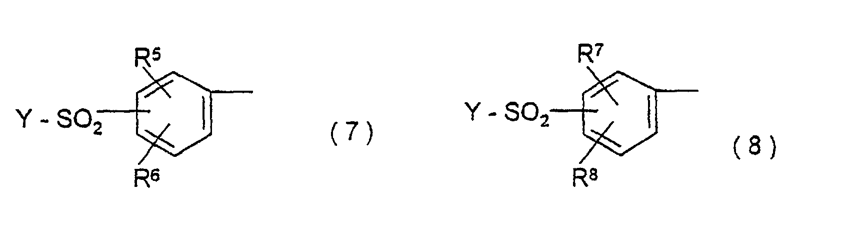 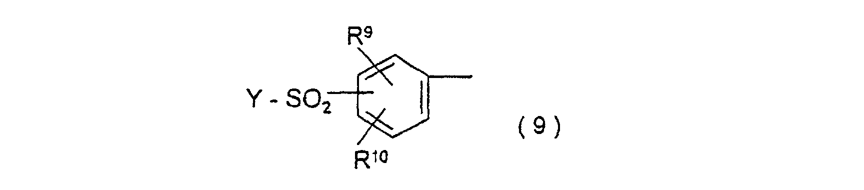 in the dyes of formulae (1), (2), (3) and (4) are, for example, 2-(β-sulfatoethylsulfonyl)phenyl, 3-(β-sulfatoethylsulfonyl)phenyl, 3- or 4-vinylsulfonylphenyl, 4-(β-sulfatoethylsulfonyl)phenyl, 2-carboxy-5-(β-sulfatoethylsulfonyl)phenyl, 4-methoxy-3-(β-sulfatoethylsulfonyl)-phenyl, 2-ethoxy-4- or -5-(β-sulfatoethylsulfonyl)phenyl, 2-methyl-4-(β-sulfatoethylsulfonyl)-phenyl, 2-methoxy-5- or -4-(β-sulfatoethylsulfonyl)phenyl, 2,4-diethoxy-5-(β-sulfatoethylsulfonyl)phenyl, 2,4-dimethoxy-5-(β-sulfatoethylsulfonyl)phenyl, 2,5-dimethoxy-4-(β-sulfatoethylsulfonyl)phenyl, 2-methoxy-5-methyl-4-(β-sulfatoethylsulfonyl)phenyl, 2- or 3- or 4-(β-thiosulfatoethylsulfonyl)phenyl, 2-methoxy-5-(β-thiosulfatoethylsulfonyl)phenyl, 2-sulfo-4-{B-phosphatoethylsulfonyl)phenyl, 2-sulfo-4-vinylsulfonylphenyl and 3-or 4-(β-acetoxyethylsulfonyl)phenyl and their corresponding vinylsulfonyl derivatives.

The radicals of the general formulae (5) to (9) are preferably independently from one another 3-vinylsulfonylphenyl, 4-vinylsulfonylphenyl, 3-(β-sulfatoethylsulfonyl)phenyl and 4-(β-sulfatoethylsulfonyl)phenyl, and if vinylsulfonyl as well as β-sulfatoethylsulfonyl groups are present in the dye mixtures, the molar ratio between the vinylsulfonyl portions and the β-sulfatoethylsulfonyl portions is between 5 : 95 and 30 : 70.

The dye mixtures of the invention can be present as a preparation in solid or liquid (dissolved) form. In solid form they generally contain the electrolyte salts customary in the case of water-soluble and in particular fiber-reactive dyes, such as sodium chloride, potassium chloride and sodium sulfate, and also the assistants customary in commercial dyes, such as buffer substances capable of establishing a pH in aqueous solution between 3 and 7, such as sodium acetate, sodium borate, sodium bicarbonate, sodium dihydrogenphosphate and disodium hydrogenphosphate, small amounts of siccatives or, if they are present in liquid, aqueous solution (including the presence of thickeners of the type customary in print pastes), substances which ensure the permanence of these preparations, for example mold preventatives.

If the dye mixtures take the form of dye powders, they contain, as a rule, 10 to 80 % by weight, based on the dye powder or preparation, of a strength-standardizing colorless diluent electrolyte salt, such as those mentioned above. These dye powders may in addition contain the abovementioned buffer substances in a total amount of up to 5 %, based on the dye powder. If the dye mixtures of the invention are present in aqueous solution, the total dye content of these aqueous solutions is up to about 50 % by weight, the electrolyte salt content of these aqueous solutions preferably being below 10 % by weight, based on the aqueous solutions (liquid preparations) can in general contain the abovementioned buffer substances in an amount of up to 5 % by weight, preferably up to 2 % by weight.

The dye mixtures of the invention can be obtained in a conventional manner, for instance by mechanically mixing the individual dyes in the required proportions or partly by synthesis by means of the customary diazotization and coupling reactions using appropriate mixtures of the diazo and coupling components in a manner familiar to those skilled in the art and the necessary proportions. One option is for example to prepare aqueous solutions of the two coupling components 1-amino-8-naphthol-3,6-disulfonic acid and the 1-amino-napthalene-4-sulfonic acid and of the aniline compounds of the formulae (10), (11) and (12) as diazo components 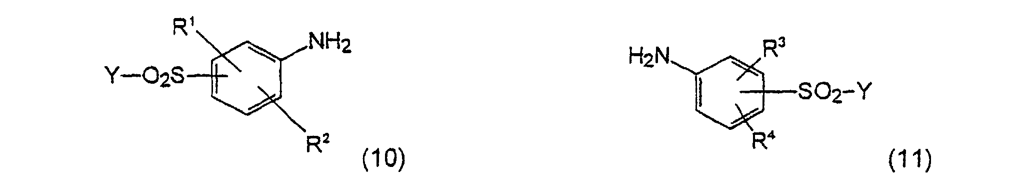 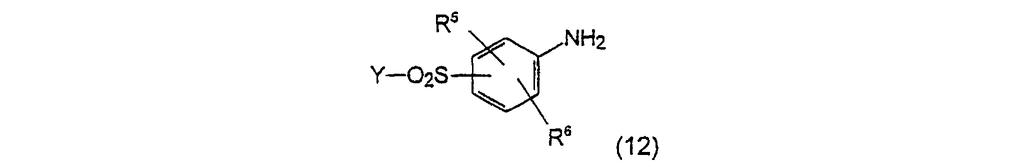 where R¹, R², R³, R⁴, R⁵, R⁶ and Y are each as defined above, in the same reaction batch in appropriate proportions, diazotizing these aniline compounds in a conventional manner in a strongly acid medium and carrying out the coupling reaction of the 1-amino-8-naphthol-3,6-disulfonic acid and of the 1-amino-naphthalene-4-sulfonic acid first at a pH of below 1.5 to produce the monoazo dyes of formulae (2) and (3) and thereafter the second coupling reaction with the monoazo dye of formula (2) at a pH of between 3 and 6 and at a temperature of 10 to 20°C to form the disazo dye conforming to the formula (1). The solution of the dyes of formulae (1) and (3) and optionally of formula (2) is then mixed with an aqueous solution of the dye or dyes of formula (4) prepared in the usual and known manner.
Another way for synthesis of the dye mixture of the invention may be to prepare strongly acid solutions or suspensions of the compounds 1-amino-8-naphthol-3,6-disulfonic acid, 1-amino-naphthalene-4-sulfonic acid and 1,3-diamino-benzene-4-sulfonic acid in the appropriate proportions, adding the aqueous solutions or suspensions of the diazotized aniline compounds of the general formulae (10), (11) and (12), defined above, and of the aniline compounds of the general formulae (13) and (14) 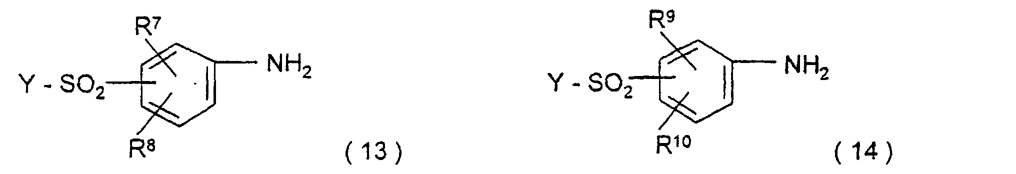 where R⁷, R⁸, R⁹, R¹⁰ and Y are defined as above, the anilines of formula (10) to (14) being preferably the same compound, and carrying out the first coupling reactions at a pH of below 1.5 and at a temperature of between 10 and 20°C and thereafter the second coupling reactions at a pH of 3 to 6 and at a temperature of 10 to 20°C.

The dye mixtures according to the invention thus obtained can be isolated from the solution by the conventional manner, for example by salting out with an electrolyte salt, such as sodium chloride, potassium chloride or lithium chloride, or by spray-drying.

Dye mixtures of the invention in which the dye chromophores contain for example not only a β-chloroethylsulfonyl or β-thiosulfatoethylsulfonyl or β-sulfatoethylsulfonyl group but also proportions with vinylsulfonyl groups cannot only be prepared by the abovementioned method but also using appropriate vinylsulfonyl starting anilines by reacting the dye mixture in which Y is a β-chloroethyl, β-thiosulfatoethyl or β-sulfatoethyl radical, with an amount of alkali required for only part of these groups and converting part said β-substituted ethylsulfonyl groups into vinylsulfonyl groups. This measure is carried out by generally known methods of converting β-substituted ethylsulfonyl groups into the vinylsulfonyl group.

The dye mixtures of the instant invention are well suitable for dyeing (which includes printing) hydroxy- and/or carboxamido-containing fiber materials by the application and fixing methods numerously described in the art for fiber-reactive dyes, in deep black shades with good color build-up, good wash fastness and very good fixation on the fiber. Moreover, the dyeings obtained are readily dischargeable.

The present invention therefore also provides for use of the novel dye mixtures for dyeing (including printing) hydroxy- and/or carboxamido-containing fiber materials and processes for dyeing such fiber materials and processes for dyeing such materials using a dye mixture according to the invention by applying the dye mixture to the substrate in dissolved form and fixing the dyes on the fiber by the action of an alkali or by heating or both.

Hydroxy-containing materials are natural or synthetic hydroxy-containing materials, for example cellulose fiber materials, including in the form of paper, or their regenerated products and polyvinyl alcohols. Cellulose fiber materials are preferably cotton but also other natural vegetable fibers, such as linen, hemp, jute and ramie fibers; regenerated cellulose fibers are for example staple viscose and filament viscose.

Carboxamido-containing materials are for example synthetic and natural polyamides and polyurethanes, in particular in the form of fibers, for example wool and other animal hairs, silk, leather, nylon-6,6, nylon-6, nylon-11, and nylon-4.

Application of the dye mixtures of the invention is by generally known processes for dyeing and printing fiber materials by the known application techniques for fiber-reactive dyes. Since the dyes of the dye mixtures according to the invention are highly compatible with one another, the dye mixtures of the invention are also advantageously useful in exhaust dyeing processes. Applied in this way for example to cellulose fibers from a long liquor ratio at temperatures between 40 and 105°C, optionally at temperatures up to 130°C, under superatmospheric pressure, and optionally in the presence of customary dyeing assistants with the use of acid-binding agents and optionally neutral salts, such as sodium chloride or sodium sulfate, they produce dyeings in very good color yields with excellent color build-up and consistent shade. One possible procedure is to introduce the material into the warm bath, gradually heat the bath to the desired dyeing temperature, and complete the dyeing process at that temperature. The neutral salts which speed up the exhaustion of the dyes can also if desired not be added to the bath until the actual dyeing temperature has been reached.

Similarly, the conventional printing processes for cellulose fibers, which can either be carried out in single-phase, for example by printing with a print paste containing sodium bicarbonate or some other acid-binding agent and the colorant, and subsequent steaming at from 100 to 103°C, or in two phases, for example by printing with a neutral or weakly acid print paste containing the colorant and subsequent fixation either by passing the printed material through a hot electrolyte-containing alkaline bath or by overpadding with an alkaline electrolyte-containing padding liquour and subsequent batching of this treated material or subsequent steaming or subsequent treatment with dry heat, produce strong prints with well defined contours and a clear white ground. Changing fixing conditions has only little effect on the outcome of the prints. Not only in dyeing but also in printing the degrees of fixation obtained with dye mixtures of the invention are very high. The hot air used in dry heat fixing by the customary thermofix processes has a temperature of from 120 to 200°C. In addition to the customary steam at from 101 to 103°C, it is also possible to use superheated steam and high pressure steam at up to 160°C.

Acid-binding agents responsible for fixing the dyes to cellulose fibers are for example water-soluble basic salts of alkali metals and of alkaline earth metals of inorganic or organic acids, and compounds which release alkali when hot. Of particular suitability are the alkali metal hydroxides and alkali metal salts of weak to medium inorganic or organic acids, the preferred alkali metal compounds being the sodium and potassium compounds. These acid-binding agents are for example sodium hydroxide, potassium hydroxide, sodium carbonate, sodium bicarbonate, potassium carbonate, sodium formate, sodium dihydrogenphosphate and disodium hydrogenphosphate.

Treating the dyes of the dye mixtures according to the invention with the acid-binding agents with or without heating bonds the dyes chemically to the cellulose fiber; especially the dyeings on cellulose, after they have been given the usual aftertreatment of rinsing to remove unfixed dye portions, show excellent wet fastness properties, in particular since the unfixed dye portions are readily washed off because of their good cold water solubility.

The dyeings of polyurethane and polyamide fibers are customarily carried out from an acid medium. The dyebath may contain for example acetic acid and/or ammonium sulfate and/or acetic acid and ammonium acetate or sodium acetate to bring it to the desired pH. To obtain a dyeing of acceptable levelness it is advisable to add customary leveling assistants, for example based on a reaction product of cyanuric chloride with three times the molar amount of an aminobenzenesulfonic acid or aminonaphthalenesulfonic acid or based on a reaction product of for example stearylamine with ethylene oxide. In general the material to be dyed is introduced into the bath at a temperature of about 40°C and agitated therein for some time, the dyebath is then adjusted to the desired weakly acid, preferably weakly acetic acid, pH, and the actual dyeing is carried out at temperature between 60 and 98°C. However, the dyeings can also be carried out at the boil or at temperatures up to 120°C (under superatmospheric pressure).

The Examples which follow illustrate the invention. Parts and precentages are by weight, unless otherwise stated. The parts by weight bear the same relation to parts by volume as the kilogram to the liter.

### Example 1

700 parts of an electrolyte-containing dye powder which contains the navy-dyeing disazo dye of the formula (A) 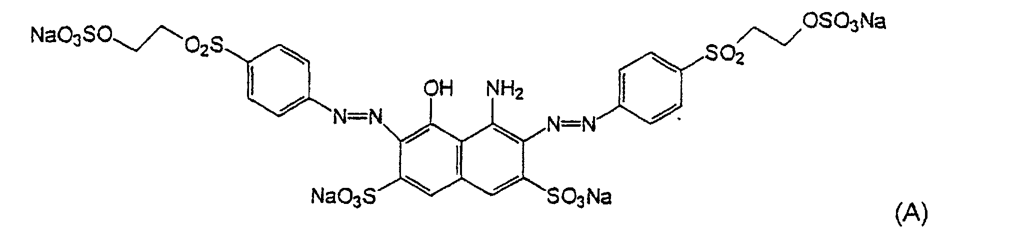 in a proportion of 50% are mechanically mixed with 143 parts of an electrolyte-containing dye powder which contains the orange-dyeing monoazo of the formula (B) 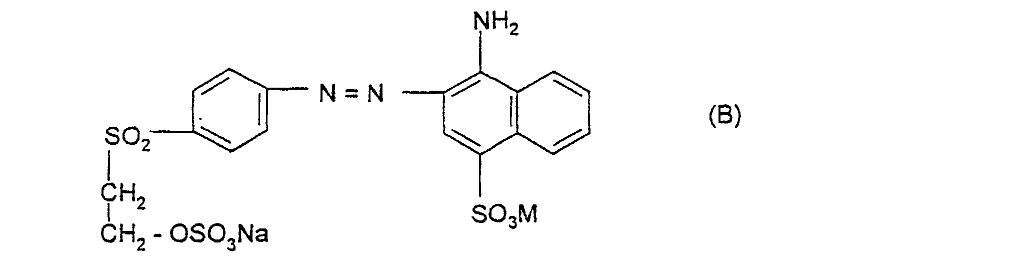 in a proportion of 70 %, and with 71 parts of an electroylte-containing dye powder which contains the yellow-dyeing disazo of the formula ( C) 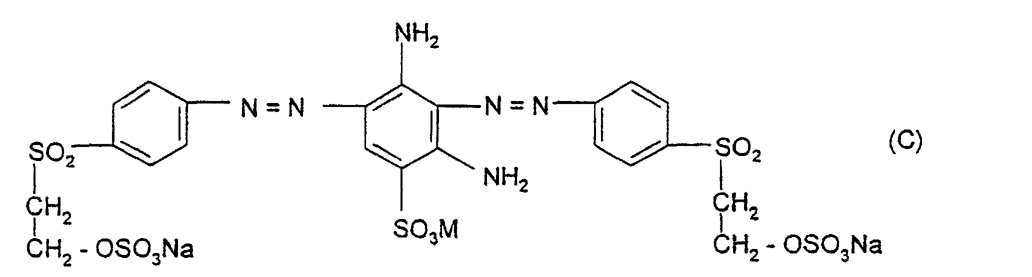 in a proportion of 70 %. The resulting dye mixture according to the invention containing the dyes of formula (A), (B) and (C) in a proportion of 70 : 20:10 %, produces, when employed according to the the application and fixing methods customary in the art for fiber-reactive dyes, for example on cellulose fiber materials dyeings and prints in deep black shades.

### Example 1a

A dye mixture according to the invention is prepared by diazotizing a suspension 281 parts of 4-(β-sulfatoethylsulfonyl)aniline in 650 parts of ice-water and 180 parts of an 30 % aqueous hydrochloric acid with 173 parts of 40 % aqueous sodium nitrite solution. 112 parts of 1-amino-8-naphthol-3,6-disulfonic acid is added and the first coupling is carried out at a pH of between 1 and 1.3 and at a temperature below 20°C (the pH is maintained with about 50 parts of sodium bicarbonate), then 45 parts of 1-naphthylamine-4-sulfonic acid and 9.4 parts of 1,3-phenylenediamine-4-sulfonic acid are added and the pH is slowly raised to a pH of from 5 to 6 with sodium carbonate, and carrying out the coupling reaction at 20°C and within that pH range.

The result is a deep black dye solution containing the dyes of formulae (A), (B) and (C) of the proportion mentioned in Example 1 (70 % : 20 % : 10 %).

This dye solution can be adjusted to pH 4.5 by adding 5 parts of a sodium phosphate buffer. By further diluting with water or by evaporating the solution, this liquid dye mixture can then be standardized to the desired strength for a liquid preparation. The dye mixture affords deep black shades on cellulose.

### Example 1b

In order to prepare a dye mixture according to the invention, the procedure according to Example 1a is carried out, however, employing an aqueous, acid suspension of the diazonium salt prepared from 272 parts, rather than from 281 parts, of 4-(β-sulfatoethylsulfonyl)-aniline. A deep black dye solution is obtained containing the dyes of the formulae (A), (B) and (C) as well as of the formula (D) 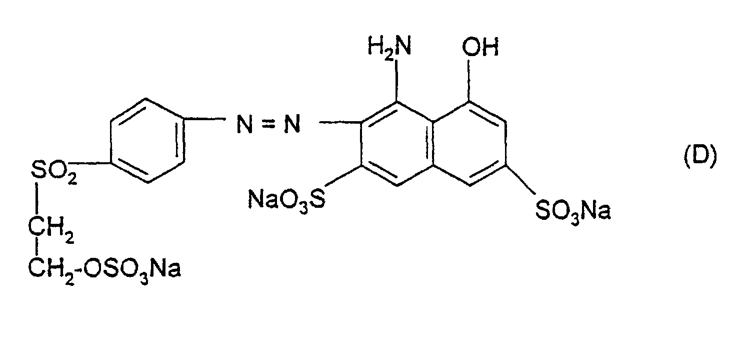 in a proportion of about 69 : 20 : 8 : 3 %.
Also this dye solution can be adjusted to a pH of 4.5 by adding 5 parts of a sodiumphosphate buffer. It may be further diluted with water or concentrated, and the liquid dye mixture thus obtained can then be standardized to the desired strength for liquid preparation. The dye mixture affords deep black shades on cellulose.

### Example 2

The method described in Example 1a can be used to prepare a similar dye mixture by varying the amount used of starting compounds, for example the amount of 1-amino-8-naphthol-3,6-disulfonic acid in an amount of 120 parts, and the 1,3-phenylenediamine-4-sulfonic acid in an amount of 4.7 parts. The result obtained is a dye mixture in which the dyes of formulae (A), (B), and (C ) are present in the ratio of about 75 % : 20 % : 5 %. The dye mixture can be isolated from the synthesis solution, for example by spray drying, or else be used directly as a liquid for dyeing. Employed according to the application and fixing methods customary in the art for fiber-reactive dyes, produces for example on cellulose fiber materials dyeings and prints in deep black shades.

### Example 3

The method described in Example 1a can be used to prepare a similar dye mixture by varying the amount used of starting compounds, for example the amount of 1-amino-8-naphthol-3,6-disulfonic acid in an amount of 104 parts and the amount of 1-naphthylamine-4-sulfonic acid in an amount of 56 parts. The result obtained is a dye mixture in which the dyes of formulae (A), (B) and (C) are present in the ratio of about 65 % : 25 % : 10 %. The dye mixture can be isolated from the synthesis solution, for example, by spray drying, or else be used directly as a liquid for dyeing. Employed according to the application and fixing methods customary in the art for fiber-reactive dyes, produces for example on cellulose fiber materials dyeings and prints in deep black shades.

### Example 4

The method described in Example 1a can be used to prepare a similar dye mixture by varying the amount used of starting compounds, for example the amount of 1-amino-8-naphthol-3,6-disulfonic acid in an amount of 112 parts, the amount of 1-naphthylamine-4-sulfonic acid in an amount of 50 parts, and the amount of 1,3-phenylendiamine-4-sulfonic acid in an amount of 7 parts. The result obtained is a dye mixture in which the dyes of formulae (A), (B) and (C) are present in the ratio of about 70 % : 22.5 % : 7.5 %. The dye mixture can be isolated from the synthesis solution, for example, by spray drying, or else be used directly as a liquid for dyeing. Employed according to the application and fixing methods customary in the art for fiber-reactive dyes, produces for example on cellulose fiber materials dyeings and prints in deep black shades.

### Example 5

The method described in Example 1a can be used to prepare a similar dye mixture by varying the amount used of starting compounds, for example the amount of 1-amino-8-naphthol-3,6-disulfonic acid in an amount of 143 parts, the amount of 1-naphthylamine-4-sulfonic acid in an amount of 2.2 parts, and the amount of 1,3-phenylendiamine-4-sulfonic acid in an amount of 47 parts. The result obtained is a dye mixture in which the dyes of formulae (A), (B) and (C) are present in the ratio of about 90 % : 1 % : 9 %. The dye mixture can be isolated from the synthesis solution, for example, by spray drying, or else be used directly as a liquid for dyeing. Employed according to the application and fixing methods customary in the art for fiber-reactive dyes, produces for example on cellulose fiber materials dyeings and prints in deep black shades.

### Example 6

The method described in Example 1a can be used to prepare a similar dye mixture by varying the amount used of starting compounds, for example the amount of 1-amino-8-naphthol-3,6-disulfonic acid in an amount of 143 parts, the amount of 1-naphthylamine-4-sulfonic acid in an amount of 11.1 parts, and the amount of 1,3-phenylendiamine-4-sulfonic acid in an amount of 9.4 parts. The result obtained is a dye mixture in which the dyes of formulae (A), (B) and (C) are present in the ratio of about 90 % : 5 % : 5 %. The dye mixture can be isolated from the synthesis solution, for example, by spray drying, or else be used directly as a liquid for dyeing. Employed according to the application and fixing methods customary in the art for fiber-reactive dyes, produces for example on cellulose fiber materials dyeings and prints in deep black shades.

### Example 7

The method described in Example 1a can be used to prepare a similar dye mixture by varying the amount used of starting compounds, for example the amount of 1-amino-8-naphthol-3,6-disulfonic acid in an amount of 135.5 parts, the amount of 1-naphthylamine-4-sulfonic acid in an amount of 11.1 parts, and the amount of 1,3-phenylendiamine-4-sulfonic acid in an amount of 18.8 parts. The result obtained is a dye mixture in which the dyes of formulae (A), (B) and (C) are present in the ratio of about 85 % : 5 % : 10 %. The dye mixture can be isolated from the synthesis solution, for example, by spray drying, or else be used directly as a liquid for dyeing. Employed according to the application and fixing methods customary in the art for fiber-reactive dyes, produces for example on cellulose fiber materials dyeings and prints in deep black shades.

### Example 8

To prepare a dye mixture in which some of the dyes have β-sulfatoethylsulfonyl group while the rest has as vinylsulfonyl group, the solution of the novel dye mixture prepared in Example 1a is used as the starting point. 25 % by volume of this solution is separated off, adjusted with sodium carbonate to a pH of 8 to 10 and subsequently stirred at 30 to 40°C for a further 30 minutes, in the course of which the β-sulfatoethylsulfonyl groups are transformed into vinylsulfonyl groups. Thereafter sulfuric acid is used to lower the pH to 4.0 to 5.0, and this solution of the vinylsulfonyl dye mixture is added to the original solution of the β-sulfatoethylsulfonyl dye mixture. The result is an aqueous solution of dyes conforming to the formulae (A-1), (B-1) and (C-1) 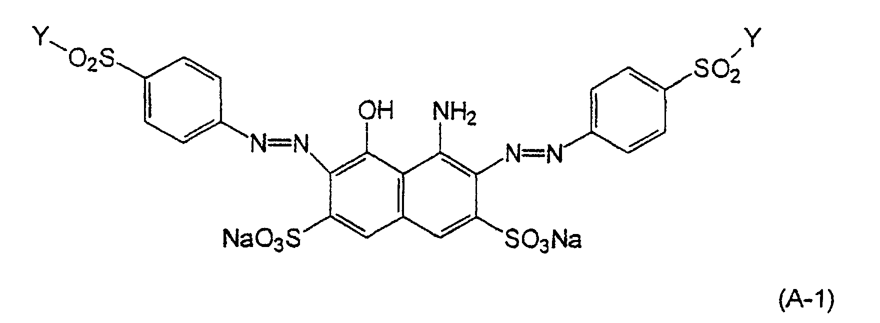 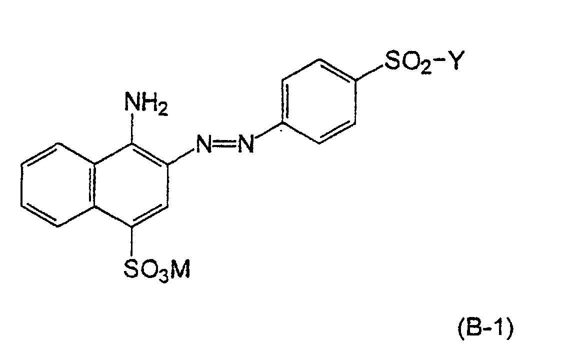 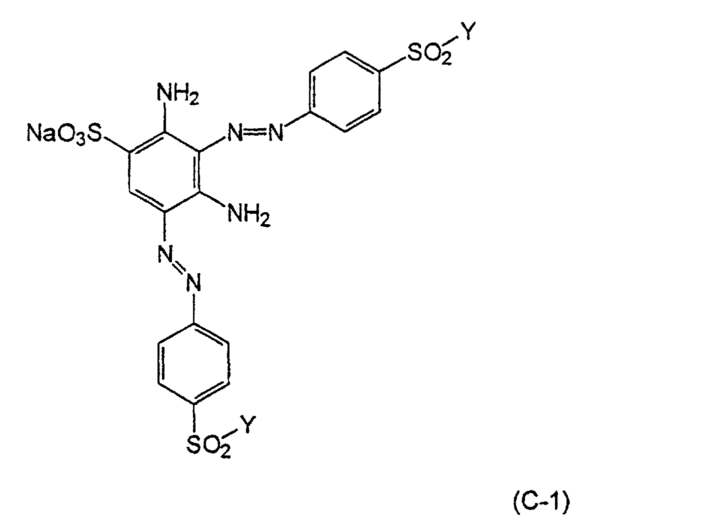 where Y is 25% vinyl and 75% β-sulfatoethyl.

The filtrate is adjusted with 5 parts of sodium phosphate buffer to a pH of 4.5. By adding or evaporating water, this aqueous solution can be adjusted to the strength desired for a liquid preparation and be used directly for dyeing. When the customary application and fixing methods in the art for fiber-reactive dyes are employed deep black shades are produced.

## Claims

1. A dye mixture, comprising one or more disazo dyes conforming to the general formula (1), optionally one or two monoazo dyes conforming to the general formula (2), one or more monoazo dyes conforming to the general formula (3) and one or more disazo dyes conforming to the general formula (4) 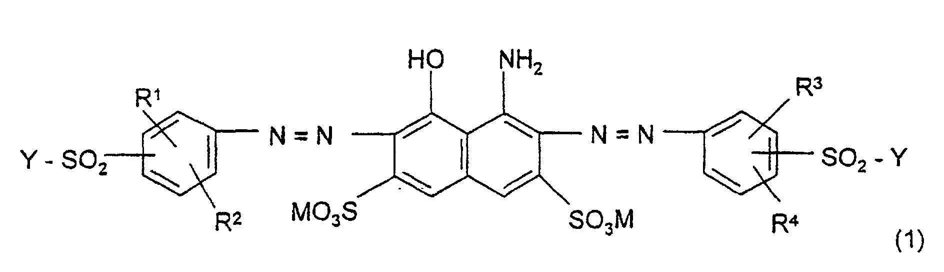 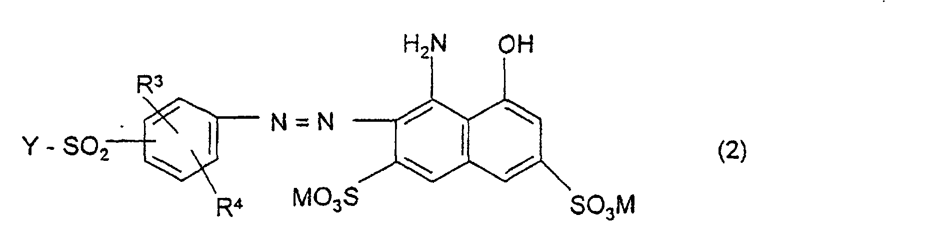 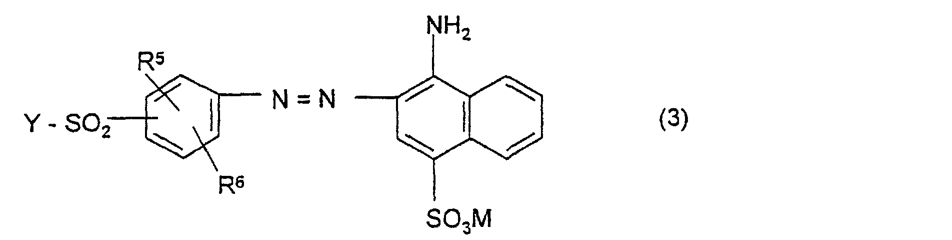 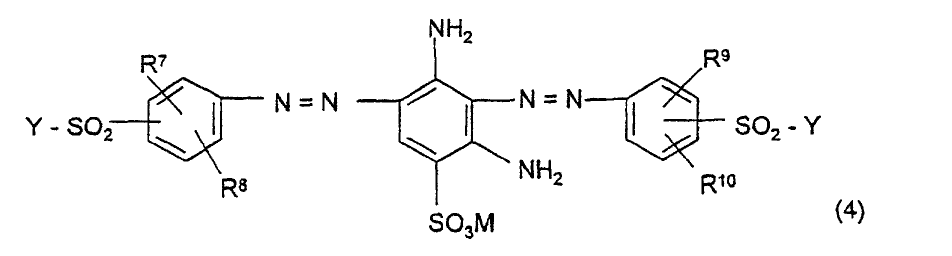 wherein:
R¹ is hydrogen, methyl, ethyl, methoxy, ethoxy, sulfo or carboxy;
R² is hydrogen, methyl, ethyl, methoxy, ethoxy, sulfo or carboxy;
R³ is hydrogen, methyl, ethyl, methoxy, ethoxy, sulfo or carboxy;
R⁴ is hydrogen, methyl, ethyl, methoxy, ethoxy, sulfo or carboxy;
R⁵ is hydrogen, methyl, ethyl, methoxy, ethoxy, sulfo or carboxy;
R⁶ is hydrogen, methyl, ethyl, methoxy, ethoxy, sulfo or carboxy;
R⁷ is hydrogen, methyl, ethyl, methoxy, ethoxy, sulfo or carboxy;
R⁸ is hydrogen, methyl, ethyl, methoxy, ethoxy, sulfo or carboxy;
R⁹ is hydrogen, methyl, ethyl, methoxy, ethoxy, sulfo or carboxy;
R¹⁰ is hydrogen, methyl, ethyl, methoxy, ethoxy, sulfo or carboxy;
Y is in each instance, independently of the others, vinyl or is ethyl which is substituted in the β-position by a substituent which is eliminated by the action of an alkali, forming the vinyl group;
M is hydrogen or an alkali metal;
the groups -SO₂-Y are bonded to the benzene ring meta or para to the azo group;
the dye, respectively dyes, of the general formula (1) or of the general formulae (1) and (2) being present in the mixture in an amount of from 65 to 95 % by weight, and the dye, respectively dyes, of the general formula (3) being present in the dye mixture in an amount of from 1 to 25 % by weight, and the dye, respectively dyes, of the general formula (4) being present in the dye mixture in an amount of from 1 to 25 % by weight, calculated on 100 % by weight of the dye mixture comprising the dyes of the general formulae (1), (3) and (4) and optionally of formula (2), while the dyes of the formulae (1) and (2), if a dye of the general formula (2) is present in the dye mixture, are present in relation to one another of 99.5 % to 94 % in respect of the disazo dye(s) of formula (1) and of 0.5 to 6 % by weight in respect of the monoazo dye(s) of formula (2), calculated on the total amount of the dyes of formulae (1) and (2).

2. A dye mixture according to claim 1 comprising one or more disazo dyes of formula (1) and optionally one or two monoazo dyes conforming to formula (2) in a total amount of from 70 to 90 % by weight, one or more monoazo dyes of formula (1) in an amount of from 5 to 22.5 % by weight and one or more dyestuffs of formula (4) in an amount of 2 to 12 % by weight.

3. A dye mixture according to claim 1, wherein R¹, R³, R⁵, R⁷ and R⁹ are each independently of one another hydrogen or methoxy and R², R⁴, R⁶, R⁸ and R¹⁰ are each hydrogen.

4. A dye mixture according to claim 1, wherein each of R¹ to R¹⁰ is hydrogen.

5. A dye mixture according to claim 1, wherein Y is in each instance, independently of the others, vinyl or is ethyl substituted in the β-position by chlorine, thiosulfato, sulfato, alkanoyloxy of 2 to 5 carbon atoms, phosphato, sulfobenzoyloxy or p-toluylsulfonyloxy.

6. A dye mixture according to claim 1, wherein Y is in each instance, independently of the others, vinyl or β-sulfatoethyl.

7. A dye mixture according to claim 1, wherein the group(s) -SO₂-Y being bonded to the benzene nucleus in meta- or para-position to the azo group(s).

8. A dye mixture according to claim 1, wherein the group(s) -SO₂-Y being bonded to the benzene nucleus in para-position to the azo group(s).

9. Use of a dye mixture as defined and claimed in claim 1, for dyeing hydroxy- and/or carboxamido-containing fiber material.

10. A process for dyeing hydroxy- and/or carboxamido-containing fiber material, in which dyes are applied to the material and the dyes are fixed to the material by means of heat or with the aid of an alkali or by means of heat and with the aid on an alkali, which comprises employing as dyes a dye mixture as claimed and defined in claim 1.

## Patentansprüche

1. Farbstoffmischung, enthaltend einen oder mehrere Disazofarbstoffe entsprechend der allgemeinen Formel (1), gegebenenfalls einen oder zwei Monoazofarbstoffe entsprechend der allgemeinen Formel (2), einen oder mehrere Monoazofarbstoffe entsprechend der allgemeinen Formel (3) und einen oder mehrere Disazofarbstoffe entsprechend der allgemeinen Formel (4) 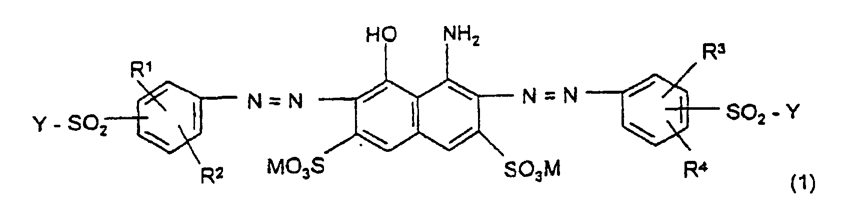 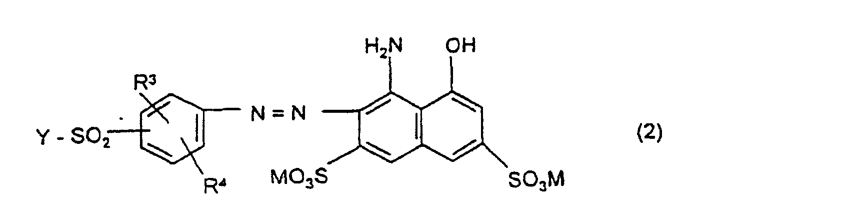 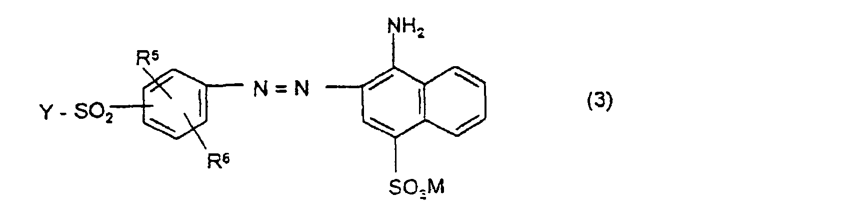 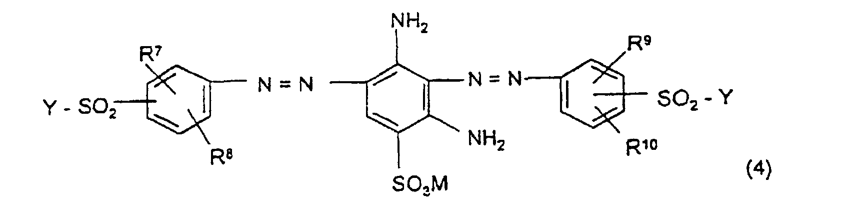 wobei
R¹ für Wasserstoff, Methyl, Ethyl, Methoxy, Ethoxy, Sulfo oder Carboxy,
R² für Wasserstoff, Methyl, Ethyl, Methoxy, Ethoxy, Sulfo oder Carboxy,
R³ für Wasserstoff, Methyl, Ethyl, Methoxy, Ethoxy, Sulfo oder Carboxy,
R⁴ für Wasserstoff, Methyl, Ethyl, Methoxy, Ethoxy, Sulfo oder Carboxy,
R⁵ für Wasserstoff, Methyl, Ethyl, Methoxy, Ethoxy, Sulfo oder Carboxy,
R⁶ für Wasserstoff, Methyl, Ethyl, Methoxy, Ethoxy, Sulfo oder Carboxy,
R⁷ für Wasserstoff, Methyl, Ethyl, Methoxy, Ethoxy, Sulfo oder Carboxy,
R⁸ für Wasserstoff, Methyl, Ethyl, Methoxy, Ethoxy, Sulfo oder Carboxy,
R⁹ für Wasserstoff, Methyl, Ethyl, Methoxy, Ethoxy, Sulfo oder Carboxy,
R¹⁰ für Wasserstoff, Methyl, Ethyl, Methoxy, Ethoxy, Sulfo oder Carboxy,
Y jeweils unabhängig voneinander für Vinyl oder für Ethyl steht, das in β-Stellung einen Substituenten enthält, der durch Alkali unter Bildung der Vinylgruppe eliminierbar ist,
M Wasserstoff oder ein Alkalimetall bedeutet,
die Gruppen -SO₂-Y in meta- oder para-Stellung zur Azogruppe an den Benzolkern gebunden sind,
der Farbstoff bzw. die Farbstoffe der allgemeinen Formel (1) oder der allgemeinen Formeln (1) und (2) in der Mischung in einer Menge von 65 bis 95 Gew.-% und der Farbstoff bzw. die Farbstoffe der allgemeinen Formel (3) in der Farbstoffmischung in einer Menge von 1 bis 25 Gew.-% und der Farbstoff bzw. die Farbstoffe der allgemeinen Formel (4) in der Farbstoffmischung in einer Menge von 1 bis 25 Gew.-% enthalten sind, jeweils bezogen auf 100 Gew.-% der die Farbstoffe der allgemeinen Formeln (1), (3) und (4) und gegebenenfalls der Formel (2) enthaltenden Farbstoffmischung, wobei die Farbstoffe der Formeln (1) und (2) bei Vorliegen eines Farbstoffs der allgemeinen Formel (2) in der Farbstoffmischung in einem gegenseitigen Verhältnis von 99,5% bis 94% bezüglich Disazofarbstoff der Formel (1) und von 0,5 bis 6 Gew.-% bezüglich Monoazofarbstoff der Formel (2), jeweils bezogen auf die Gesamtmenge der Farbstoffe der Formeln (1) und (2), enthalten sind.

2. Farbstoffmischung nach Anspruch 1, enthaltend einen oder mehrere Disazofarbstoffe der Formel (1) und gegebenenfalls einen oder zwei Monoazofarbstoffe entsprechend der Formel (2) in einer Gesamtmenge von 70 bis 90 Gew.-%, einen oder mehrere Monoazofarbstoffe der Formel (1) in einer Menge von 5 bis 22,5 Gew.-% und einen oder mehrere Farbstoffe der Formel (4) in einer Menge von 2 bis 12 Gew.-%.

3. Farbstoffmischung nach Anspruch 1, bei der R¹, R³, R⁵, R⁷ und R⁹ jeweils unabhängig voneinander für Wasserstoff oder Methoxy und R², R⁴, R⁶, R⁸ und R¹⁰ jeweils für Wasserstoff stehen.

4. Farbstoffmischung nach Anspruch 1, bei der R¹ bis R¹⁰ jeweils für Wasserstoff stehen.

5. Farbstoffmischung nach Anspruch 1, bei der Y jeweils unabhängig voneinander für Vinyl oder für Ethyl steht, das in β-Stellung durch Chlor, Thiosulfato, Sulfate, Alkanoyloxy mit 2 bis 5 Kohlenstoffatomen, Phosphato, Sulfobenzoyloxy oder p-Toluylsulfonyloxy substituiert ist.

6. Farbstoffmischung nach Anspruch 1, bei der Y jeweils unabhängig voneinander für Vinyl oder für β-Sulfatoethyl steht.

7. Farbstoffmischung nach Anspruch 1, bei der die Gruppe(n) -SO₂-Y in meta- oder para-Stellung zur Azogruppe bzw. zu den Azogruppen an den Benzolkern gebunden ist bzw. sind.

8. Farbstoffmischung nach Anspruch 1, bei der die Gruppe(n) -SO₂-Y in para-Stellung zur Azogruppe bzw. zu den Azogruppen an den Benzolkern gebunden ist bzw. sind.

9. Verwendung einer Farbstoffmischung gemäß Anspruch 1 zum Färben von hydroxy- und/oder carbonamidgruppenhaltigem Fasermaterial.

10. Verfahren zum Färben von hydroxy- und/oder carbonamidgruppenhaltigem Fasermaterial, bei welchem man Farbstoffe auf das Material aufbringt und die Farbstoffe auf dem Material mittels Wärme oder mit Hilfe eines alkalisch wirkenden Mittels oder mittels beider Maßnahmen fixiert, bei dem man als Farbstoffe eine Farbstoffmischung gemäß Anspruch 1 einsetzt.

## Revendications

1. Mélange de colorants, comprenant un ou plusieurs colorants diazoïques conformes à la formule générale (1), facultativement un ou deux colorants monoazoïques conformes à la formule générale (2), un ou plusieurs colorants monoazoïques conformes à la formule générale (3) et un ou plusieurs colorants diazoïques conformes à la formule générale (4) 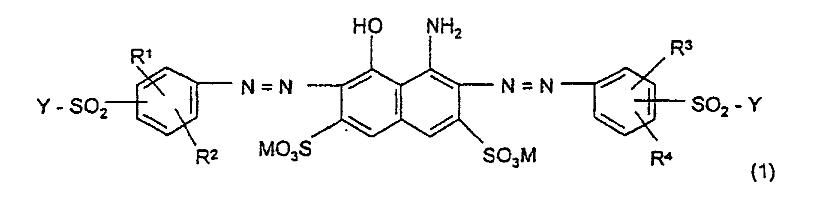 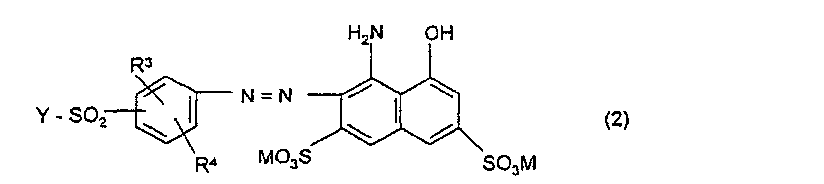 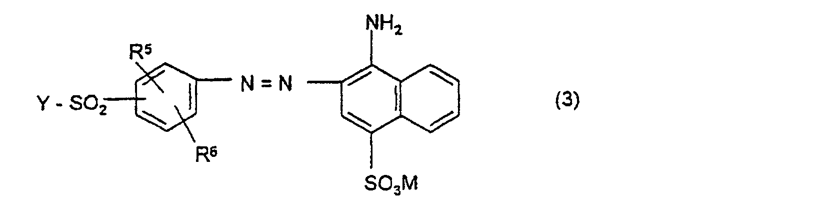 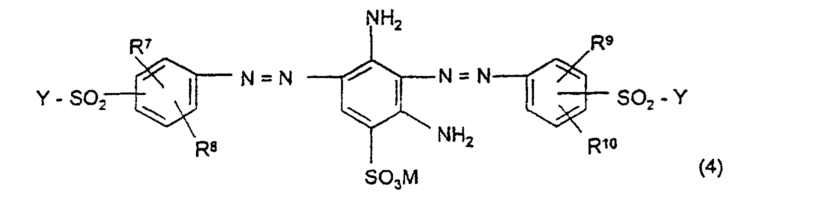 dans lesquelles
R¹ est hydrogène, méthyle, éthyle, méthoxy, éthoxy, sulfo ou carboxy ;
R² est hydrogène, méthyle, éthyle, méthoxy, éthoxy, sulfo ou carboxy ;
R³ est hydrogène, méthyle, éthyle, méthoxy, éthoxy, sulfo ou carboxy ;
R⁴ est hydrogène, méthyle, éthyle, méthoxy, éthoxy, sulfo ou carboxy ;
R⁵ est hydrogène, méthyle, éthyle, méthoxy, éthoxy, sulfo ou carboxy ;
R⁶ est hydrogène, méthyle, éthyle, méthoxy, éthoxy, sulfo ou carboxy ;
R⁷ est hydrogène, méthyle, éthyle, méthoxy, éthoxy, sulfo ou carboxy ;
R⁸ est hydrogène, méthyle, éthyle, méthoxy, éthoxy, sulfo ou carboxy ;
R⁹ est hydrogène, méthyle, éthyle, méthoxy, éthoxy, sulfo ou carboxy ;
R¹⁰ est hydrogène, méthyle, éthyle, méthoxy, éthoxy, sulfo ou carboxy ;
Y est dans chaque cas, indépendamment des autres, vinyle ou éthyle qui est substitué dans la position β par un substituant qui est éliminé par l'action d'un alcali, en formant le groupement vinyle ;
M est hydrogène ou un métal alcalin ;
les groupements -SO₂-Y sont liés au cycle benzène en méta ou para par rapport au groupement azo ;
le colorant, respectivement les colorants, de la formule générale (1) ou des formules générales (1) et (2), étant présent(s) dans le mélange dans une quantité de 65 à 95% en poids, et le colorant, respectivement les colorants, de la formule générale (3) étant présent(s) dans le mélange de colorants dans une quantité de 1 à 25% en poids, et le colorant, respectivement les colorants, de la formule générale (4) étant présent(s) dans le mélange de colorants dans une quantité de 1 à 25% en poids, calculé sur 100% en poids du mélange de colorants comprenant les colorants des formules générales (1), (3) et (4) et facultativement de la formule (2), alors que les colorants des formules (1) et (2), si un colorant de la formule générale (2) est présent dans le mélange de colorants, sont présents en relation l'un par rapport à l'autre de 99,5% à 94% en ce qui concerne le(s) colorant(s) diazoïque(s) de formule (1) et de 0,5 à 6% en poids en ce qui concerne le(s) colorant(s) monoazoïque(s) de formule (2), calculé sur la quantité totale des colorants des formules (1) et (2).

2. Mélange de colorants selon la revendication 1 comprenant un ou plusieurs colorants diazoïques de formule (1) et facultativement un ou deux colorants monoazoïques conformes à la formule (2) dans une quantité totale de 70 à 90% en poids, un ou plusieurs colorants monoazoïques de formule (1) dans une quantité de 5 à 22,5% en poids et un ou plusieurs colorants de formule (4) dans une quantité de 2 à 12% en poids.

3. Mélange de colorants selon la revendication 1, dans lequel R¹, R³, R⁵, R⁷ et R⁹ sont, chacun indépendamment l'un de l'autre, hydrogène ou méthoxy et R², R⁴, R⁶, R⁸ et R¹⁰ sont chacun hydrogène.

4. Mélange de colorants selon la revendication 1, dans lequel chacun des R¹ à R¹⁰ est hydrogène.

5. Mélange de colorants selon la revendication 1, dans lequel Y est dans chaque cas, indépendamment des autres, vinyle ou éthyle substitué dans la position β par un chlore, thiosulfato, sulfato, alcanoyloxy de 2 à 5 atomes de carbone, phosphato, sulfobenzoyloxy ou p-toluylsulfonyloxy.

6. Mélange de colorants selon la revendication 1, dans lequel Y est dans chaque cas, indépendamment des autres, vinyle ou β-sulfatoéthyle.

7. Mélange de colorants selon la revendication 1, dans lequel le(s) groupement(s) -SO₂-Y est (sont) lié(s) au noyau benzène en position méta ou para par rapport au(x) groupement(s) azo.

8. Mélange de colorants selon la revendication 1, dans lequel le(s) groupement(s) -SO₂-Y est (sont) lié(s) au noyau benzène en position para par rapport au(x) groupement(s) azo.

9. Utilisation d'un mélange de colorants comme défini et revendiqué dans la revendication 1, pour la coloration de matériau fibreux contenant des hydroxy et/ou carboxamido.

10. Procédé de coloration de matériau fibreux contenant des hydroxy et/ou carboxamido, dans lequel les colorants sont appliqués au matériau et les colorants sont fixés au matériau au moyen de la chaleur ou avec l'aide d'un alcali ou au moyen de la chaleur et avec l'aide d'un alcali, qui comprend l'utilisation comme colorants d'un mélange de colorants comme revendiqué et défini dans la revendication 1.
